# EUROPÄISCHE PATENTANMELDUNG

(11) **EP 1 083 236 A1**
(43) Veröffentlichungstag der Anmeldung: **14.03.2001**
(21) Anmeldenummer: 99890291.0
(22) Anmeldetag: 09.09.1999
(51) Int. Cl.: C21B 3/08

(54) **Verfahren und Anlage zur Trockenkühlung von metallurgischen Schlacken mit Wärmerückgewinnung**

(71) Anmelder: Hulek, Anton, Dipl.-Ing., A-4040 Linz (AT)
(72) Erfinder: Hulek, Anton, Dipl.-Ing., A-4040 Linz (AT)
(74) Vertreter: Haffner, Thomas M., Dr.

(57) **Zusammenfassung**

Zur Gewinnung von hochwertiger Hochofen- oder Stahlwerkschlacke wird schmelzflüssige Schlacke in Mulden eines Muldenbandes (3) gegossen und die Wärme durch Strahlung sowie Kühlluft im Bereich des Plattenbandes (3) bzw. Kühlschachtes (5) rückgewonnen. Um eine besonders hochwertige Schlacke zu erzielen, wird mittels Lanzen geringfügig Wasser in die Schlackenschmelze eingepreßt.

Die Möglichkeit der Entsorgung von Verbrennungsrückständen aus Sondermüll etc. mittels flüssiger Schlacke ist vorgesehen.

## Beschreibung

Die Erfindung bezieht sich auf eine rationelle Trockenkühlung von Hochofen-, LD-, Kupol- und E-Ofenschlacken und auf eine Vorrichtung zum Durchführen des Verfahrens.

Die üblichen Verfahren zur Kühlung von Hochofenschlacke und anderen Schlacken aus der Stahlindustrie eignen sich zumeist nur für bestimmte Weiterverarbeitungen z.B. für glasiges Granulat und ermöglichen keine Wärmegewinnung. Andere Verfahren wiederum haben als Hauptziel eine günstige Wärmerückgewinnung und erzeugen dabei ein minderwertiges Produkt.

In der DE 29 50 974 A1 wird eine Vorrichtung zur Herstellung einer glasartigen bzw. verglasten Hochofenschlacke beschrieben. Die glasartige Struktur der Hochofenschlacke wird dadurch erreicht, daß die geschmolzene Hochofenschlacke in Metall-Kühlelemente eingebracht wird, welche an einem Endlosförderband angebracht sind. Die Metall-Kühlelemente sind dazu so ausgebildet, daß sie zur Aufnahme der geschmolzenen Hochofenschlacke schmale und tiefe Kühlnuten aufweisen. Auf die Dimensionierung der Kühlnuten mit einer Tiefe bis zu 40 mm und eine Breite zwischen 2 und 4 mm ist die schnelle Abkühlung der dementsprechend dünnen Schlackenschichten bei großer Oberfläche und Wärmeleitfähigkeit der Kühlkörper zurückzuführen, wodurch in der Folge nach dem schnellen Abkühlvorgang glasartige Hochofenschlacke vorliegt.

Aus der DD 201 152 ist eine Anlage zur Wärmerückgewinnung aus geschmolzenen Schlacken zu entnehmen, bei der wärmeübertragende Bauelemente so angeordnet sind, daß sowohl die fühlbare Wärme des Granuliermediums als auch die Wärme der schmelzflüssige Schlacke führenden Teile und die Konvektions- und Strahlungswärme der Schlacke effektiv auf ein wärmeabführendes Medium übertragen werden. Hierzu wird die Schlacke auf ein Kühlwalzenpaar am Einlaufteil der Anlage gebracht. Durch Drehung der Walzen, welche ihrerseits aus dem Walzeninneren gekühlte Rippen aufweisen, kühlt die geschmolzene Schlacke ab und gelangt auf eine weitere mit einem Wärmetauscher ausgestattete Förderrinne.

Die DE 15 08 198 A und die Patent Abstracts of Japan, unexamined applications, Sektion C, Band 3, Nr. 27, 7.März 1979 (07.03.79) The Patent Office Japanese Government, Seite 96 C 39 Nr. 54-2295 (Mitsui Zosen K K) sehen eine Schlackenkühlung mit Hilfe von eingedüstem Wasser bzw. Wasserdampf in einen Kühlraum vor.

Ein nicht unwesentlicher Teil der anfallenden Stahlwerkschlacken wird auch heute noch auf primitive Weise in Boxen, Beeten und dergleichen ausgegossen. Dabei wird der gesamte Wärmeinhalt vernichtet und durch Bildung von SO₂ und H₂S negativer Einfluß auf die Umwelt ausgeübt. Minderwertige Schlacke wird anschließend verhaldet, sodaß auch heute noch neue Schlackenberge entstehen.

Der Erfindung liegt daher die Aufgabe zugrunde, diese Mängel zu beseitigen und ein Verfahren zur Trockenkühlung von Schlacken zu schaffen, welches bei vergleichsweise geringem Bauaufwand den wirtschaftlichen, qualitativen und umwelttechnischen Anforderungen unserer Zeit entspricht.

Zur Lösung dieser Aufgabe besteht die Erfindung darin, daß die Schlacke in unisolierte Mulden eines Muldenbandes geregelt gegossen zu einer langsamen Abkühlung, mit kristalliner Erstarrung gebracht wird sowie an der Oberseite des oberen Trumes des Muldenbandes Strahlungspanele, an der Unterseite des oberen Trumes und an beiden Seiten des unteren Trumes Luftkanäle angeordnet sind, welche die Schlackenwärme teils direkt und die von den Mulden aufgenommenen Schlackenwärme teils indirekt mittels Kühlluft einem Abhitzekessel zuführen.

Die erfindungsgemäße Verfahrensweise ermöglicht eine langsame Trockenkühlung aller Schlacken aus der Stahlindustrie zur Herstellung von kristalliner Schlacke mit Dicken von etwa 20-50 mm zur Weiterverarbeitung zu hochwertigen Schotterprodukten ohne Wasseranwendung bei gleichzeitig weitestgehender Rückgewinnung des Wärmeinhaltes mit einem hohen Temperaturniveau, wobei eine Rückgewinnung eines großen Wärmeinhaltes, z.B. durch Dampferzeugung unter Gewinnung von Sattdampf oder überhitzten Dampf, erzielt werden kann.

Während der langsamen Weiterbewegung des Muldenbandes mit ca. 2 - 8 m/min füllen sich die einzelnen Mulden je nach Bedarf etwa 20 - 50 mm tief. Die Schlacke erstarrt langsam und erreicht am Ende des Muldenbandes nach ca. 5 - 15 min eine Temperatur von 900 - 1000 Grad. Die Gießmulden des Muldenbandes werden bereits im oberen Trum an der Unterseite durch Gebläseluft gekühlt. Die Kühlung setzt sich im unteren Trum durch dieselbe Gebläseluft an beiden Seiten der Mulden fort, sodaß sie beim nächsten Eintreten in das obere Trum soweit zurückgekühlt sind, daß eine neue Beaufschlagung mit flüssiger Schlacke erfolgen kann. Die relativ hohe Temperatur der Mulden vor der weiteren Beaufschlagung ist für eine langsame Abkühlung der Schlacke bzw. für eine günstige kristalline Struktur der Schlacke von Vorteil.

Die Kühlluft des Muldenbandes wird über einen Heißzyklon und einen Abhitzekessel erneut zur Kühlung eingesetzt. Durch den bestehenden Kreislauf geht keine Wärme verloren, wenn man von den geringen Abstrahlungsverlusten absieht.

Die Schlackenplatten werden abgeworfen, wobei mit Vorteil die vom Muldenband abgeworfene Schlacke im noch heißen Zustand gebrochen wird. Mit besonderem Vorteil wird die gebrochene Schlacke durch einen Kühlschacht mittels Luft, die einem Abhitzekessel zugeführt wird, weiter gekühlt, wobei die Schlacke auf etwa 200 Grad abgekühlt wird. Die Kühlluft durchläuft anschließend einen Heißzyklon und wird in einem Abhitzekessel soweit zurückgekühlt, daß sie im Kühlschacht wieder der Abkühlung dienen kann.

Alternativ kann das Verfahren so durchgeführt werden, daß die gebrochene Schlacke auch durch eine wassergekühlte Vibrorinne weitergekühlt wird, wobei der Schlackenschotter durch Strahlung und Wärmeleitung abgekühlt wird. Das als Kühlmedium verwendete Wasser kann dabei direkt für die Wärmerückgewinnung genutzt werden.

Eine Weiterbildung der Erfindung besteht darin, daß die noch flüssige Schlacke in den Mulden durch Eindüsen geringer Wassermengen porig gemacht wird. Dadurch, daß in die noch flüssige Schlacke am Beginn des Muldenbandes eine sehr geringe Wassermenge eingedüst wird, wird eine gezielte Porenbildung in der Schlacke erreicht. Schlacke mit Poren hat den Vorteil, daß sie eine geringere Dichte aufweist und daher einen billigeren Transport ermöglicht. Außerdem bewirken fein verteilte Poren eine bessere Reibung auch nach fortgeschrittenem Abrieb, was z.B. im Straßenbau von Vorteil ist.

Eine zusätzliche Weiterbildung der Erfindung besteht darin, daß in die flüssige Schlacke nicht brennbarer Sondermüllrückstand eingebracht und mit der Schlacke verschmolzen wird, sodaß die Schlacke inklusive Sondermüllrückstand verwendbar oder deponierbar gemacht wird. Auf diese Weise können Rückstände aus der Sondermüllverbrennung und sonstige nicht brennbare, die Umwelt belastende Abfälle mit der flüssigen Schlacke vermischt oder chemisch verbunden werden. Die daraus entstehende feste Schlacke bindet die Schadstoffe und ist z.B. für Beschüttungen verwendbar bzw. deponierbar.

Die Vorrichtung zur Durchführung des erfindungsgemäßen Verfahren besteht aus einem Zwischengefäß mit Sedimentationssumpf und Meßsonde, einer Verteilerrinne mit Brenner, einem Muldenband mit einlagigen Mulden aus hitzebeständigem Gußeisen oder hitzebeständigem Stahl, aus Strahlungspanelen, aufeinanderfolgenden Luftkanälen, einem Kühlschacht bzw. einer Vibrorinne und Abhitzekessel. Dadurch, daß ein Zwischengefäß vorgesehen ist, über welches die schmelzflüssige Schlacke über eine Verteilerrinne auf ein umlaufendes Muldenband geleitet wird, wird ein Ausgleich des stoßweisen Anfalles der schmelzflüssigen Schlacke sichergestellt. Die Mulden sind aus hitzefestem Gußeisen oder hitzebeständigem Stahl hergestellt und sind auf der Innen- und Außenseite ohne jede Isolation. An der Oberseite des Muldenbandes befinden sich Stahlungspanele, die Strahlungswärme der flüssigen oder soeben erstarrten Schlacke aufnehmen und dem Dampfkessel zuleiten. Besonders bevorzugt ist dem Muldenband ein Stachelbrecher nachgeordnet.

Mit Vorteil ist das Muldenband durch eine Haube abgedeckt, sodaß keine Gase unkontrolliert entweichen können. Mit einer derartigen Haube können Gase, wie z.B. SO₂, das sich durch die Berührung mit der Luft bildet, nicht entweichen und es wird ein weiterer Zutritt von Luft bzw. Sauerstoff und weitere SO₂-Bildung verhindert. Geringe Abgasmengen werden nötigenfalls abgesaugt und niedergeschlagen, um auch eine Geruchsbelästigung für die Umwelt zu vermeiden.

Besonders bevorzugt ist die Anlage mit einer oder mehreren innengekühlten Wasserlanzen ausgestattet, die das Einpressen von geringen Wassermengen über Düsen in die flüssige Schlacke ermöglichen. Dadurch daß die Wasserlanzen für die Eindüsung intensiv innengekühlt sind, haftet die Schlacke nicht fest und kann die ausgepreßte Wassermenge, die ein Teil des Kühlwassers ist, beliebig dosiert werden. Bei bestimmten Qualitätsanforderungen wird das Eindüsen von Wasser entfallen. Dabei ist die Ausbildung mit Vorteil so getroffen, daß die innengekühlten Wasserlanzen durch Federn oder hydraulisch bzw. pneumatisch auf das Muldenband gedrückt werden und dadurch sicher auf den Muldenboden bzw. über die Zwischenwände geführt werden.

Die Erfindung wird im folgenden anhand eines der in Zeichnung schematisch dargestellten Ausführungsbeispieles näher beschrieben. In dieser zeigen Fig. 1 eine erfindungsgemäße Vorrichtung zur rationellen Trockenkühlung mit einem nachgeschalteten Kühlschacht, Fig. 2 eine Vorrichtung zur Trockenkühlung mit einer Vibrorinne und Fig. 3 einen Ausschnitt des Muldenbandes mit einer innengekühlten Wasserlanze.

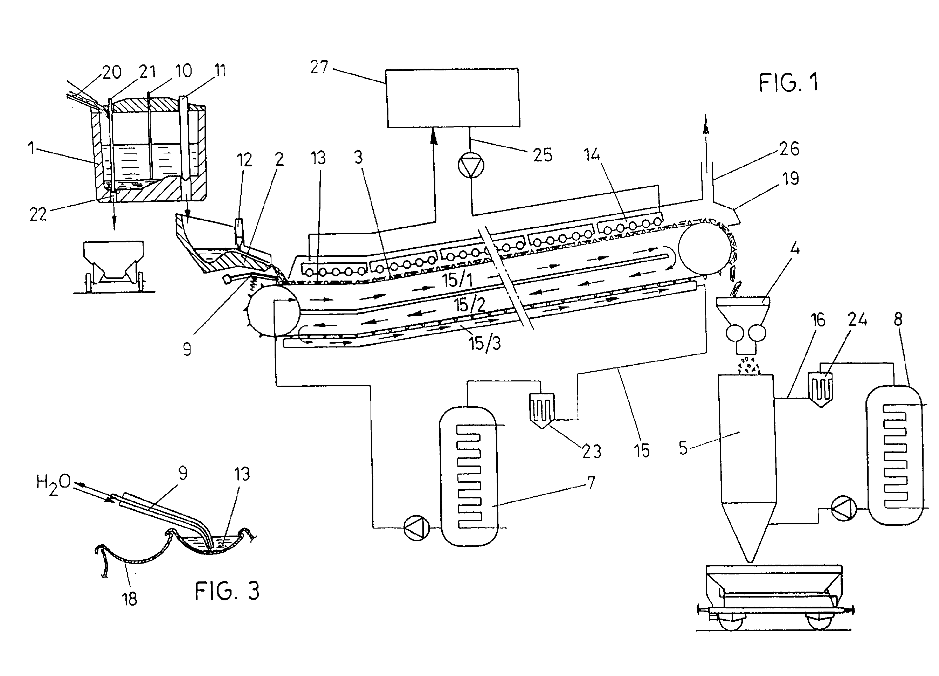

In Fig. 1 ist eine Trockenkühlanlage zum rationellen Kühlen von Hochofen- und Stahlwerkschlacken dargestellt, welche sich im wesentlichen aus einem Zwischengefäß 1, einer Verteilerrinne 2, einem nachgeordneten Muldenband 3, einem Stachelbrecher 4, einem Kühlschacht 5, einem Abhitzekessel I 7, einem Abhitzekessel II 8 und einem Dampfkessel 27 zusammensetzt.

Die schmelzflüssige Schlacke wird über eine Schlackenrinne 20 in das Zwischengefäß 1 geleitet, das die Schlacke speichert und durch eine hochwertige Isolation flüssig hält. Vor einer Beschickung des Zwischengefäßes 1 wird dieses durch einen nicht dargestellten Brenner entsprechend aufgewärmt. Eine dünne erstarrte Schlackenschicht an den Wandungen schützt die Isolation des Zwischengefäßes 1 vor einem chemischen Angriff der relativ aggressiven Flüssigschlacke. In der Schlacke befindliches flüssiges Roheisen oder Stahlanteile sedimentieren im Zwischengefäß 1 und können nach einer entsprechenden Ansammlung, die von einer Meßsonde 10 festgestellt wird, über einen mit einem Roheisenstopfen 21 verschließbaren Abstich 22 flüssig abgestochen und dem Stahlwerk rückgeführt werden.

Die Flüssigschlacke wird über einen Schlackenstopfen 11 geregelt der Verteilerrinne 2 zugeführt. Die Schlacke fließt von der Verteilerrinne gleichmäßig auf das Muldenband 3 weiter. Um die Überlaufkante bzw. die Überlaufeinstiche auch während Unterbrechungen von erstarrten Schlackenteilen freizuhalten, verfügt die Verteilerrinne über einen oder mehrere Brenner 12. Die Schlacke wird anschließend als Füllungen 13 durch das Muldenband 3 weitergefördert und nach der Erstarrung am oberen Ende des Muldenbandes abgeworfen. Das Muldenband ist mit einer Haube 19 abgedeckt, wobei über eine Öffnung 26 der Haube 19 Abgase abgezogen werden können. Die abgeworfenen relativ großen Schlackenplatten werden durch einen Stachelbrecher 4 zerkleinert, um im nachfolgenden Kühlturm 5 eine leichtere Kühlung zu ermöglichen. Diese Zerkleinerung kann in einem weiteren Brecherbetrieb auf sämtliche gewünschte Korngrößen fortgesetzt werden.

Die Wärmerückgewinnung erfolgt durch Strahlungsübertragung auf Strahlungspanele 14 sowie durch einen Kühlluftkreislauf 15, bei welchem im Bereich des Plattenbandes 3 Luftkanäle 15/1, 15/2 und 15/3 vorgesehen sind, sowie durch einen Kühlkreislauf 16 im Bereich des Kühlschachtes 5. In den Kühlkreisläufen 15 und 16 im Bereich des Plattenbandes 3 sowie im Bereich des Kühlschachtes 5 wird dabei Luft als Kühlmedium verwendet, wobei die erwärmte Luft jeweils über Heißzyklone 23 bzw. 24 den Abhitzekesseln 7 bzw. 8 zugeführt wird. Die Abhitze dieser Abhitzekesseln wird über nicht näher dargestellte Leitungen einem Dampfkesselsystem 27 zur Dampferzeugung zugeführt. Zusätzlich wird dem Dampfkesselsystem die Abhitze der Strahlungspanele 14, bei welchem als Kühlmedium Wasser verwendet wird, über den Kühlkreislauf 25 zugeführt.

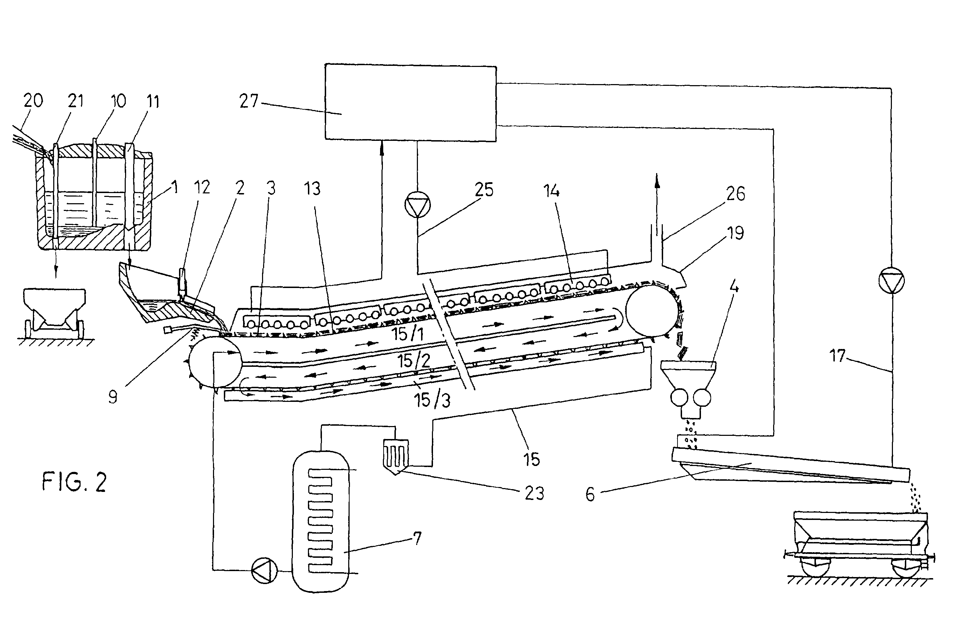

In Fig. 2 ist eine von der Fig. 1 abgewandelte Vorrichtung zur Trockenkühlung von Schlacke dargestellt, wobei dem Stachelbrecher 4 zur Weiterkühlung der gebrochenen Schlacke eine wassergekühlte Vibrorinne 6 nachgeschaltet ist. Für gleiche Teile wurden dabei die Bezugszeichen beibehalten.

Die Abhitze der Vibrorinne 6 wird über einen Kühlkreislauf 17 dem Dampfkesselsystem 27 zur Dampferzeugung zugeführt. Die Abhitze der Strahlungspanele 14, des Abhitzekessels 7 und des Abhitzekessels 8 bzw. der Vibrorinne kann natürlich auch für die Aufheizung von Schrott oder dergleichen direkt verwendet werden.

Zur Qualitätssteigerung der kristallin erstarrten Schlacke wird eine Reihe von in Fig. 3 näher dargestellten innengekühlten Lanzen 9 zur fein dosierten Eindüsung geringer Wassermenge in die Mulden 18 eingesetzt.

## Patentansprüche

1. Verfahren zur rationellen Trockenkühlung von Hochofen-, LD-, Kupol- und E-Ofenschlacke dadurch gekennzeichnet, daß die Schlacke in unisolierte Mulden (18) eines Muldenbandes (3) geregelt gegossen zu einer langsamen Abkühlung, mit knistalliner Erstarrung gebracht wird sowie an der Oberseite des oberen Trumes des Muldenbandes (3) Strahlungspanele (14), an der Unterseite des oberen Trumes und an beiden Seiten des unteren Trumes Luftkanäle (15/1 bis 15/3) angeordnet sind, welche die Schlackenwärme teils direkt und die von den Mulden (18) aufgenommenen Schlackenwärme teils indirekt mittels Kühlluft einem Abhitzekessel zuführen.

2. Verfahren nach Anspruch 1 dadurch gekennzeichnet, daß die vom Muldenband (3) abgeworfene Schlacke im noch heißen Zustand gebrochen wird.

3. Verfahren nach Anspruch 1 dadurch gekennzeichnet, daß die laut Anspruch 2 gebrochene Schlacke durch einen Kühlschacht (5) mittels Luft, die einem Abhitzekessel (8) zugeführt wird, weiter gekühlt wird.

4. Verfahren nach Anspruch 1 dadurch gekennzeichnet, daß die laut Anspruch 2 gebrochene Schlacke durch eine wassergekühlte Vibrorinne (6) weitergekühit wird.

5. Verfahren nach Anspruch 1 dadurch gekennzeichnet, daß die noch flüssige Schlacke in den Mulden (18) durch Eindüsen geringer Wassermengen porig gemacht wird.

6. Verfahren nach Anspruch 1 dadurch gekennzeichnet, daß in die flüssige Schlacke nicht brennbarer Sondermüllrückstand eingebracht und mit der Schlacke verschmolzen wird, sodaß die Schlacke inklusive Sondermüllrückstand verwendbar oder deponierbar gemacht wird.

7. Trockenkühlanlage zum Kühlen von Hochofen-, LD-, Kupol- und E-Ofenschlacke nach Anspruch 1 bis 6, die aus einem Zwischengefäß (1) mit Sedimentationssumpf und Meßsonde (10), einer Verteilerrinne (2) mit Brenner (12), einem Muldenband (3) mit einlagigen Mulden (18) aus hitzebeständigem Gußeisen oder hitzebeständigem Stahl, aus Strahlungspanelen (14), aufeinanderfolgenden Luftkanälen (15/1 bis 15/3), einem Kühlschacht (5) bzw. einer Vibrorinne (6) und Abhitzekessel (7 und 8) besteht.

8. Anlage nach Anspruch 7 dadurch gekennzeichnet, daß das Muldenband (3) durch eine Haube (19) abgedeckt ist, sodaß keine Gase unkontrolliert entweichen können.

9. Anlage nach Anspruch 7 dadurch gekennzeichnet, daß dem Muldenband (3) ein Stachelbrecher (4) nachgeordnet ist.

10. Anlage nach Anspruch 7 dadurch gekennzeichnet, daß die Anlage mit einer oder mehreren innengekühlten Wasserlanzen (27) ausgestattet ist, die das Einpressen von geringen Wassermengen über Düsen in die flüssige Schlacke (13) ermöglichen.

11. Anlage nach Anspruch 7 und 10 dadurch gekennzeichnet, daß die innengekühlten Wasserlanzen durch Federn oder hydraulisch bzw. pneumatisch auf das Muldenband gedrückt werden und dadurch sicher auf den Muldenboden bzw. über die Zwischenwände geführt werden.
